# EUROPEAN PATENT APPLICATION

(11) **EP 2 178 029 A1**
(43) Date of publication of application: **21.04.2010**
(21) Application number: 08166712.3
(22) Date of filing: 15.10.2008
(51) Int. Cl.: G06K 9/32

(54) **Method for detecting objects.**

(71) Applicant: Nederlandse Organisatie voor toegepast-natuurwetenschappelijk onderzoek TNO, 2628 VK Delft (NL)
(72) Inventor: Van Huis, Jasper R., 2612 KT Delft (NL); Baan, Jan, 2743 HG Waddinxveen (NL)
(74) Representative: Hatzmann, Martin

(57) **Abstract**

Method for detecting objects, e.g. vehicles, humans etc., using image recording means like a video camera, arranged for producing a stream or set of images, as well as processing means, arranged for classifying, based on a training set of sub-images, sub-images within the images produced by the image recording means and discriminating between valid sub-images, i.e. representing an object to be detected, and non-valid sub-images, the processing means, moreover, being arranged to perform tracking operations on the set of valid sub-images, resulting in object tracks, representing the motions of the detected objects. After this the object tracks are evaluated, based on predetermined evaluation criteria, e.g. track length, inclination etc., resulting in valid tracks and non-valid tracks, after which a subset of sub-images, belonging to valid tracks, are fed to said training set in order to be used for classifying sub-images within the images produced by the image recording means, either replacing sub-images in the training set of being added to the training set. Thus, the tracks are evaluated and a subset of images which contributed to valid tracks is used to update the training set of the image classifier. In this way the classification quality is improved and, moreover, the training set is adapted to changing recording conditions etc. like light intensity, shadowing etc., which has been proven in practice.

## Description

The present invention refers to a method for detecting objects, e.g. vehicles, humans etc., using image recording means like a video camera, arranged for producing a stream or set of images, as well as processing means, arranged for classifying, based on a training set of sub-images, sub-images within the images produced by the image recording means and discriminating between valid sub-images, i.e. representing an object to be detected, and non-valid sub-images, the processing means, moreover, being arranged to perform tracking operations on the set of valid sub-images, resulting in object tracks, representing the motions of the detected objects.

Such method is e.g. known from W02004086301, disclosing a system and method for detecting and tracking an object, which a camera captures a video sequence comprised of a plurality of image frames. A processor receives the video sequence and analyzes each image frame to determine if and where objects are detected. The processor applies one or more classifiers to a sub-image within each image frame and computes a confidence score based on the application of the one or more classifiers to the object. A database stores the one or more classifiers and vehicle training samples.

One aim of the present invention is to provide a method for detecting objects which gives better results. Another aim is to provide a method for detecting objects in which the system which performs the method adapts itself automatically to changing circumstances like e.g. (when used outdoors) light intensity, shading etc. due to sunrise and sunset, cloudiness etc.

To that end, in a method for detecting objects as defined in the preamble, according to the invention it is preferred to include the following steps:
- the object tracks are evaluated, based on predetermined evaluation criteria, e.g. track length, inclination etc., resulting in valid tracks and non-valid tracks;
- a subset of sub-images, belonging to valid tracks, are fed to (or inserted into) said training set in order to be used for classifying sub-images within the images produced by the image recording means, either replacing sub-images in the training set of being added to the training set.

In the method according to the invention thus the tracks are evaluated and a subset of the images which contributed to the compilation of valid tracks is used to update the training (or learning) set of the recognition classifier (or detector). In this way the classification quality is improved. Moreover, the training set is adapted to possibly changed recording conditions etc. like light intensity, shadowing etc., causing that the detection capabilities show a much greater robustness, i.e. a lower sensitiveness for altering conditions, which has been proven in practice. It is noted that the adaptation of the classifier to the changed conditions, of course, will only be effective after the classifier has performed a new training operation applying the newest training set which includes the latest subset of sub-images which were used to compile a valid track, as indicated above.

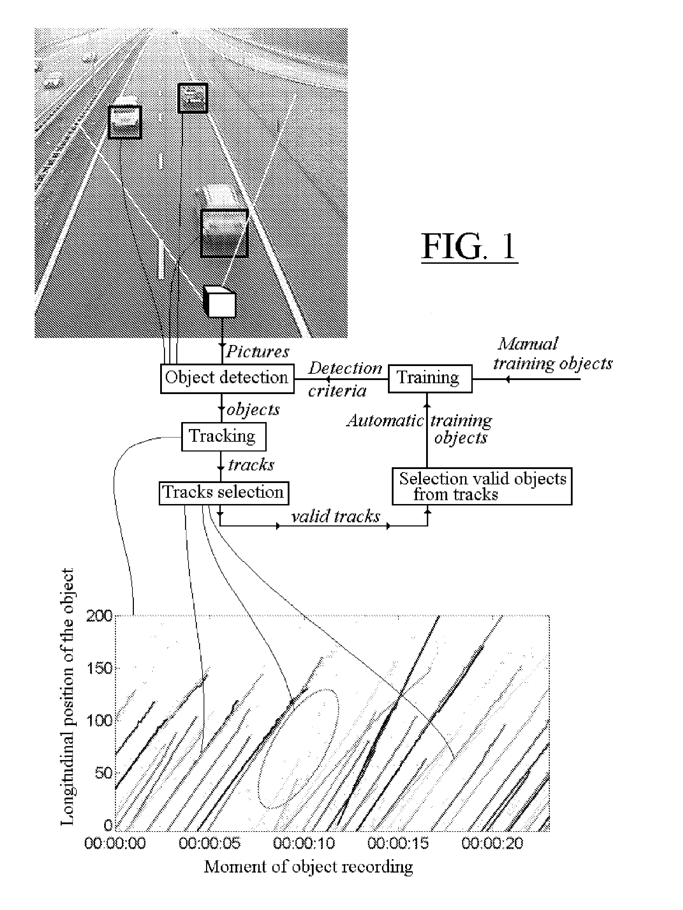

- Figure 1: gives an illustration of the steps which are performed according to the invention;

Figure 1 illustrates the method for detecting cars driving on a motorway. A video camera is used for producing a stream of images of the cars (and their environment). Processing means are provided, which have been represented by a configuration of cooperating processor modules which are arranged for classifying (i.e. car detection), based on an (e.g. manually entered) training set (of car sub-images), resulting in detection criteria by which the car sub-images (objects), included in the images produced by the video camera, are discriminated into valid sub-images (objects), i.e. representing an object to be detected, and non-valid sub-images (objects), i.e. into sub-images which are deemed to represent a cars indeed (valid sub-images) and sub-images which do not (or which are dubious).

The processing means, moreover, comprise a tracking module which is capable to perform tracking operations on the set of valid car sub-images, resulting in a number of car tracks. Such a car track is a set of detections of one car, representing the motion of that car in the image sequence. The various car tracks are shown in the below part of figure 1. According to the present invention the operation is continued as follows.

In a tracks selection module the car tracks are evaluated, based on predetermined evaluation criteria, e.g. track length, inclination etc., resulting in valid tracks and non-valid tracks (see e.g. the short tracks and track spots within the oval). For instance short tracks are dismissed, while long tracks are deemed to represent valid car tracks. Next, a subset of car sub-images, (only) belonging to valid tracks, are fed to the training set in order to be used, by the detection module, for classifying (detection) the car sub-images included in the images produced by the camera, either replacing car sub-images already present in the training set of being added to the existing training set.

In this way (and by means the configuration shown in figure 1) the tracks are evaluated and a subset of car sub-images which contributed to valid tracks is used to update the training (or learning) set of the image classifier (detector). In this way the classification quality is improved and, moreover, the training set will be adapted to changing recording conditions etc. like light intensity, shadowing etc., which has been proven in practice.

An experiment was done by the applicant to find out the behavior of the system outlined above, which experiment successfully proved that the system adapts itself to varying conditions in the way outlined in the preceding, resulting in improved outcomes.

## Claims

1. Method for detecting objects, e.g. vehicles, humans etc., using image recording means like a video camera, arranged for producing a stream or set of images, as well as processing means, arranged for classifying, based on a training set of sub-images, sub-images within the images produced by the image recording means and discriminating between valid sub-images, i.e. representing an object to be detected, and non-valid sub-images, the processing means, moreover, being arranged to perform tracking operations on the set of valid sub-images, resulting in object tracks, representing the motions of the detected objects,
the method including following steps:
- the object tracks are evaluated, based on predetermined evaluation criteria, e.g. track length, inclination etc., resulting in valid tracks and non-valid tracks;
- a subset of sub-images, belonging to valid tracks, are fed to said training set in order to be used for classifying sub-images within the images produced by the image recording means, either replacing sub-images in the training set of being added to the training set.
